# EUROPÄISCHE PATENTSCHRIFT

(11) **EP 4 406 095 B1**
(45) Veröffentlichungstag und Bekanntmachung des Hinweises auf die Patenterteilung: **30.04.2025**
(21) Anmeldenummer: 22764701.3
(22) Anmeldetag: 10.08.2022
(51) Int. Cl.: H02K 1/24, H02K 3/52, H02K 15/02, H02K 3/51

(54) **STÜTZEINRICHTUNG FÜR EINEN ROTOR MIT ROVINGWICKLUNG**
SUPPORT DEVICE FOR A ROTOR WITH A ROVING WINDING
DISPOSITIF DE SUPPORT POUR UN ROTOR AVEC UN ENROULEMENT DE MÈCHE

(30) Priorität: 20.09.2021 DE 102021124234
(43) Veröffentlichungstag der Anmeldung: 31.07.2024
(73) Patentinhaber: Bayerische Motoren Werke Aktiengesellschaft, 80809 München (DE)
(72) Erfinder: SCHMIDT, Robert, 81539 München (DE); LANG, Markus, 81549 München (DE)
(86) Internationale Anmeldenummer: PCT/EP2022/072398
(87) Internationale Veröffentlichungsnummer: WO 2023/041257

(56) Entgegenhaltungen:
- DE-A1- 10 300 796
- JP-A- S6 328 243
- JP-B1- S5 514 613
- US-A1- 2014 091 670

## Beschreibung

Die Erfindung betrifft einen Schenkelpolrotor für eine elektrische Maschine. Der Schenkelpolrotor weist einen Rotorkern, welcher ein Rotorjoch und in Umfangsrichtung an dem Rotorjoch verteilt angeordnete Schenkelpole aufweist, auf. Jeweils zwei radial gegenüberliegende Schenkelpole bilden ein Schenkelpolpaar aus. Die Schenkelpole weisen jeweils einen Rotorzahn und einen Polschuh auf. Außerdem umfasst der Schenkelpolrotor magnetfelderzeugende Wicklungen, welche um die Rotorzähne der Schenkelpole gewickelt sind und an gegenüberliegenden Stirnseiten des Rotorkerns Wickelköpfe ausbilden, und eine Stützvorrichtung zum Abstützen der Wickelköpfe. Die Erfindung betrifft außerdem eine elektrische Maschine.

Vorliegend richtet sich das Interesse auf elektrische Maschinen, welche beispielsweise als Antriebsmaschinen für elektrifizierte Kraftfahrzeuge, also Elektro- oder Hybridfahrzeuge, eingesetzt werden können. Solche elektrischen Maschinen weisen üblicherweise einen ortsfesten Stator mit bestrombaren Statorwicklungen sowie einen bezüglich des Stators drehbar gelagerten Rotor auf. Im Falle einer fremderregten Maschine weist auch der Rotor bestrombare Rotorwicklungen auf. Diese können bei einem Rotor in Schenkelpolbauweise um Schenkelpole bzw. Rotorpole eines Rotorkerns des Rotors gewickelt sein. Die Wicklungen werden beispielsweise unter Ausbildung von Wickelköpfen über Sternscheiben geführt, welche an axial einander gegenüberliegenden Stirnseiten des Blechpakets angeordnet sind. Die Wickelköpfe werden aus Stabilitätsgründen von jeweils einer Endkappe bzw. einem Stützring ummantelt. Die Stützringe können beispielsweise über einen Bajonettverschluss mit der jeweiligen Sternscheibe mechanisch verbunden sein. Durch die Sternscheiben-Stützring-Konstruktion werden die Wickelköpfe am äußersten Bereich des Schenkelpolrotors, an welchem die größten Fliehkräfte wirken, abgestützt. Dies kann dazu führen, dass die Wickelköpfe, insbesondere im Bereich von Anschlussdrähten der Wickelköpfe zum Stromgeber, bei hohen Drehzahlen nur unzureichend gestützt sind. US 2014/091670 A1 offenbart eine Stützvorrichtung für einen Schenkelpolrotor gegen die Fliehkräfte.

Es ist Aufgabe der vorliegenden Erfindung, eine Stützvorrichtung für einen Schenkelpolrotor einer elektrischen Maschine mit einer besonders hohen Stützwirkung bereitzustellen.

Diese Aufgabe wird erfindungsgemäß durch einen Schenkelpolrotor sowie eine elektrische Maschine mit den Merkmalen gemäß den jeweiligen unabhängigen Patentansprüchen gelöst. Vorteilhafte Ausführungen der Erfindung sind Gegenstand der abhängigen Patentansprüche, der Beschreibung sowie der Figuren.

Ein erfindungsgemäßer Schenkelpolrotor für eine elektrische Maschine umfasst einen Rotorkern, welcher ein Rotorjoch und in Umfangsrichtung an dem Rotorjoch verteilt angeordnete Schenkelpole aufweist, wobei jeweils zwei radial gegenüberliegende Schenkelpole ein Schenkelpolpaar ausbilden und wobei die Schenkelpole jeweils einen Rotorzahn und einen Polschuh aufweisen. Außerdem weist der Schenkelpolrotor magnetfelderzeugende Wicklungen, welche um die Rotorzähne der Schenkelpole gewickelt sind und an gegenüberliegenden Stirnseiten des Rotorkerns Wickelköpfe ausbilden, und eine Stützvorrichtung zum Abstützen der Wickelköpfe auf. Die Stützvorrichtung weist eine Spann- und Umlenkeinrichtung und eine Rovingwicklung mit zumindest einem Roving auf. Durch den Roving sind mehrere, in Umfangsrichtung versetzte, die Wicklungen eines Schenkelpolpaars umspannende Windungen gebildet. Der Roving weist dazu axiale erste Rovingabschnitte und stirnseitige zweite Rovingabschnitte auf, wobei die zweiten Rovingabschnitte mittels der Spann- und Umlenkeinrichtung zum Ausbilden einer Windung zwischen radial gegenüberliegenden Schenkelpolen über die Wickelköpfe geführt sind und zum Ausbilden eines Windungsübergangs zwischen zwei Windungen beim Führen über die Wickelköpfe entlang der Umfangsrichtung umgelenkt sind.

Zur Erfindung gehört außerdem eine elektrische Maschine mit einem Stator und einem bezüglich des Stators drehbar gelagerten erfindungsgemäßen Schenkelpolrotor. Die elektrische Maschine ist insbesondere als eine stromerregte Innenläufer-Synchronmaschine (SSM) ausgebildet. Die elektrische Maschine ist insbesondere eine Traktionsmaschine eines elektrifizierten Kraftfahrzeugs.

Der Rotorkern des Schenkelpolrotors ist beispielsweise als ein Blechpaket aus axial gestapelten und miteinander verbundenen Elektroblechlamellen ausgebildet. Der Rotorkern weist das, beispielsweise ringförmige, Rotorjoch auf, durch welches eine Rotorwelle hindurchgeführt und drehfest mit dem Rotorkern verbunden werden kann. Die Rotorzähne sind radial an dem Rotorjoch abstehend und in Umfangsrichtung beabstandet zueinander angeordnet. An den Rotorzähnen sind die kreissegmentförmigen Polschuhe angeordnet. Teilbereiche der Polschuhe stehen dabei entlang der Umfangsrichtung über, sodass Wicklungsleiter der Wicklungen, welche um die Rotorzähne gewickelt sind, radial zwischen den Polschuhen und dem Rotorjoch angeordnet und beim Rotieren des Schenkelpolrotors von den Polschuhen auf den Rotorzähnen gehalten sind.

An den axial gegenüberliegenden Stirnseiten des Rotorkerns kann außerdem jeweils eine Sternscheibe angeordnet sein, welche zum Führen der Wicklungsleiter über die Stirnseiten des Rotorkerns dient. Eine geometrische Form der Sternscheiben korrespondiert dabei mit der Schenkelpolbauweise des Rotorkerns. Die über die Stirnseiten geführten Wicklungsleiterabschnitte bilden die Wickelköpfe aus. Diese können dabei von axial abstehenden Auskragungen der Sternscheiben beim Rotieren des Rotors auf den Sternscheiben gehalten und somit gegen die beim Rotieren wirkenden Fliehkräfte abgestützt werden. Zum Verbessern der Stützwirkung der Sternscheiben gegen die Fliehkräfte weist der Schenkelpolrotor außerdem die Stützvorrichtung auf.

Die Stützvorrichtung weist einen Roving auf. Unter einem Roving ist ein Bündel bzw. Strang aus parallel angeordneten Filamenten (Endlosfasern) zu verstehen. Der Roving ist insbesondere als ein Kunststofffaserbündel oder Glasfaserbündel ausgebildet. Dieser Roving bzw. dieses Faserbündel wird derart in mehreren Windungen paarweise um die bestrombaren Wicklungen gewickelt, dass jeweils zwei gegenüberliegende Schenkelpole unter Zug mechanisch verbunden bzw. verspannt sind. Die Wicklungen jedes Schenkelpolpaars sind dabei von zumindest einer Windung umgeben. Vorzugsweise weist die Rovingwicklung bzw. Faserbündelwicklung für jedes Schenkelpolpaar zumindest zwei Windungen auf. Dabei ist jeweils zumindest eine Windung an den in Umfangsrichtung gegenüberliegenden, an den jeweiligen Rotorzähnen abstehenden Polschuhbereichen der Polschuhe angeordnet. Die Windungen erstrecken sich bei in axialer Richtung entlang der Wicklungen und in radialer Richtung über die Wickelköpfe und sind in Umfangsrichtung versetzt zueinander angeordnet, wobei jeweils zwei Windungen über einen Windungsübergang verbunden sind. Zum in Umfangsrichtung versetzten Anordnen der Windungen sowie zum Vorbeiführen der zweiten, stirnseitigen Rovingabschnitte an der Rotorwelle des Schenkelpolrotors ist die Spann- und Umlenkeinrichtung vorgesehen. Die Spann- und Umlenkeinrichtung weist insbesondere zwei Spann- und Umlenkrollen auf, welche drehfest an den axial gegenüberliegenden Stirnseiten des Rotorkerns angeordnet ist. Beispielsweise sind die Spann- und Umlenkrollen an beiden Stirnseiten drehfest mit der durch den Rotorkern hindurchgeführten Rotorwelle verbunden. Die Spann- und Umlenkrollen weisen insbesondere mehrere, axial übereinander angeordnete Führungsnuten zum Umlenken und Vorbeiführen der zweiten Rovingabschnitte an der Rotorwelle des Schenkelpolrotors auf.

Für die Montage der Stützvorrichtung an dem Schenkelpolrotor wird insbesondere ein Rovinganfang des Rovings zum Fixieren des Rovings durch Ausbilden eines Rovingzugs mehrmals um die erste Spann- und Umlenkrolle gewickelt. Ausgehend von der ersten Spann- und Umlenkrolle wird der Roving über den Wickelkopf der ersten Stirnseite zu einem ersten Schenkelpol eines ersten Schenkelpolpaares geführt und axial entlang der Wicklung dieses Schenkelpols von der ersten Stirnseite zu der zweiten Stirnseite geführt. Dort wird der Roving mittels der zweiten Spann- und Umlenkrolle über den Wickelkopf der zweiten Stirnseite, an der Rotorwelle vorbei, zu einem radial gegenüberliegenden zweiten Schenkelpol des ersten Schenkelpolpaares geführt. Von dort aus wird der Roving axial entlang der Wicklung des zweiten Schenkelpols zurück zur ersten Stirnseite geführt, wo sie mittels der ersten Spann- und Umlenkrolle unter Vollendung der ersten Windung über den Wickelkopf der ersten Stirnseite geführt wird. Dabei wird der Roving mittels der ersten Spann- und Umlenkrolle entlang der Umfangsrichtung abgelenkt, sodass eine versetzt zur ersten Windung angeordnete zweite Windung begonnen wird. Der Roving wird dabei soweit entlang der Umfangsrichtung abgelenkt, dass die zweite Windung entweder erneut am ersten Schenkelpol beginnt und somit eine weitere Windung für das erste Schenkelpolpaar gewickelt wird, oder dass die zweite Windung an einem Schenkelpol eines zweiten Schenkelpolpaares beginnt und somit eine Windung für das zweite Schenkelpolpaar gewickelt wird. Dabei werden so viele Windungen erzeugt, dass jedes Schenkelpolpaar mit zumindest einer Windung umwickelt ist.

Eine solche, durch eine Spann- und Umlenkeinrichtung sowie eine Rovingwicklung gebildete Stützvorrichtung weist, insbesondere bei hohen Drehzahlen, eine hohe Stützwirkung gegenüber Fliehkräften auf.

Besonders bevorzugt sind zwischen den Wicklungen und den Polschuhen der Schenkelpole axial erstreckende Lücken gebildet, in welchen die ersten, axialen Rovingabschnitte angeordnet sind. Die Lücken sind dabei lediglich über Pollücken, welche zwischen zwei Schenkelpolen gebildet sind, offen und somit zugänglich. Die Roving wird dabei zunächst entlang der Umfangsrichtung ausgelenkt, um sie in der Pollücke anordnen zu können und tangential in die Lücke einschieben bzw. einfädeln zu können. Insbesondere weisen die Sternscheiben dabei Einführhilfen zum Einführen der ersten Rovingabschnitte in die Lücken auf. Beispielsweise sind die Einführhilfen als an den Wickelköpfen axial überstehende Stifte der Sternscheiben ausgebildet, zwischen welchen der Roving im Bereich des Übergangs zwischen den ersten Rovingabschnitten und den zweiten Rovingabschnitten angeordnet ist. Die Stifte, welche insbesondere an den axialen Auskragungen der Sternscheiben angeordnet sind, sind dazu ausgelegt, ein Verrutschen der zweiten Rovingabschnitte entlang der Umfangsrichtung beim Einführen des Rovings in die Lücken zu verhindern. Durch die Stifte wird der Roving bereichsweise an dem jeweiligen Schenkelpol fixiert, sodass der zweite, über den Wickelkopf geführte Rovingabschnitt bei der einfädelbedingten Auslenkbewegung nicht entlang der Umfangsrichtung verrutscht.

In einer vorteilhaften Weiterbildung der Erfindung weist der Schenkelpolrotor Stützringe auf, welche an den Stirnseiten zum Ummanteln der Wickelköpfe angeordnet sind, wobei Kavitäten unterhalb der Stützringe, in welchen die Wickelköpfe und die Rovingwicklung angeordnet sind, mit einer Vergussmasse zum Ausbilden eines die Rovingwicklung aufweisenden Faserverbundwerkstoffes gefüllt sind. Die Stützringe bzw. Endkappen weisen insbesondere einen zylindrischen Mantel auf, welcher sich an eine Außenseite der axial abstehenden Auskragungen der Sternscheiben anschmiegen und mit diesen mechanisch verbunden sind. Ein mit den Stirnseiten überlappender Deckel der Stützringe weist Befüllöffnungen auf, über welche die Vergussmasse zum weiteren Erhöhen der Stützwirkung eingefüllt werden kann.

Die mit Bezug auf den erfindungsgemäßen Schenkelpolrotor vorgestellten Ausführungsformen und deren Vorteile gelten entsprechend für die erfindungsgemäße elektrische Maschine.

Die Erfindung wird nun anhand eines bevorzugten Ausführungsbeispiels sowie unter Bezugnahme auf die Zeichnungen näher erläutert.

Es zeigen:
- Fig. 1: eine schematische Perspektivdarstellung von Komponenten eines Schenkelpolrotors für eine elektrische Maschine;
- Fig. 2: ein vergrößerter Ausschnitt des Schenkelpolrotors ohne eine Rovingwicklung;
- Fig. 3: ein vergrößerter Ausschnitt des Schenkelpolrotors mit der Rovingwicklung;
- Fig. 4: ein vergrößerter Ausschnitt des Schenkelpolrotors im Bereich einer Stirnseite des Schenkelpolrotors;
- Fig. 5: eine Querschnittsdarstellung durch einen Schenkelpol; und
- Fig. 6: eine Perspektivdarstellung eines fertig montierten Schenkelpolrotors.

In den Figuren sind gleiche sowie funktionsgleiche Elemente mit den gleichen Bezugszeichen versehen.

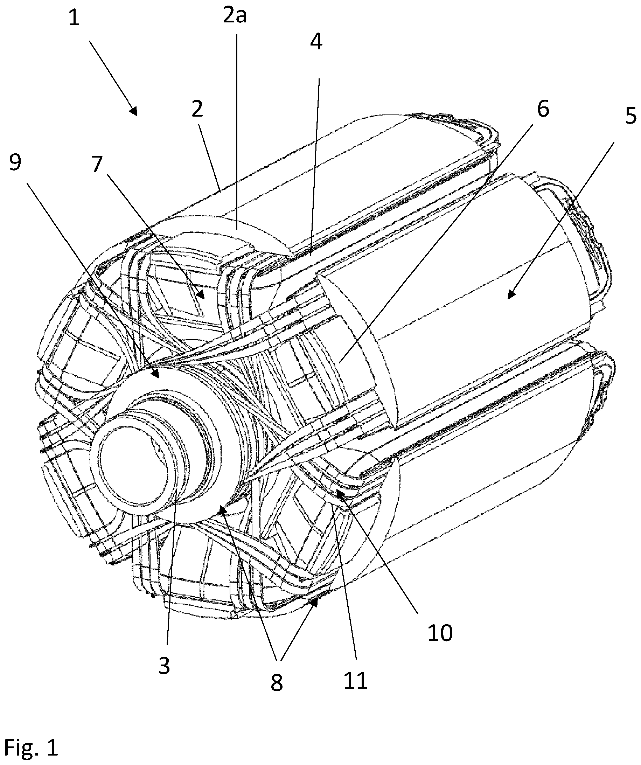

Fig. 1 zeigt Komponenten eines Schenkelpolrotors 1 für eine hier nicht gezeigte stromerregte elektrische Maschine. Der Schenkelpolrotor 1 weist einen Rotorkern 2 auf, welcher drehfest mit einer Rotorwelle 3 zur Drehmomentübertragung verbunden ist. Der Rotorkern 2 dient zum Halten sowie zum Leiten eines Magnetfeldes von bestrombaren Wicklungen 4 des Schenkelpolrotors 1. Zum Ausbilden einer Wicklung 4 sind hier drahtförmige Wicklungsleiter um jeweils einen Schenkelpol 5 des Rotorkerns 2 gewickelt und über Sternscheiben 6 geführt, welche an gegenüberliegenden Stirnseiten 2a des Rotorkerns 2 angeordnet sind. Die Wicklungen 4 bilden an den Sternscheiben 6 Wickelköpfe 7 aus. Zum Abstützen der Wickelköpfe 7 gegenüber Fliehkräften im Betrieb der elektrischen Maschine weist der Schenkelpolrotor 1 außerdem eine Stützvorrichtung 8 auf.

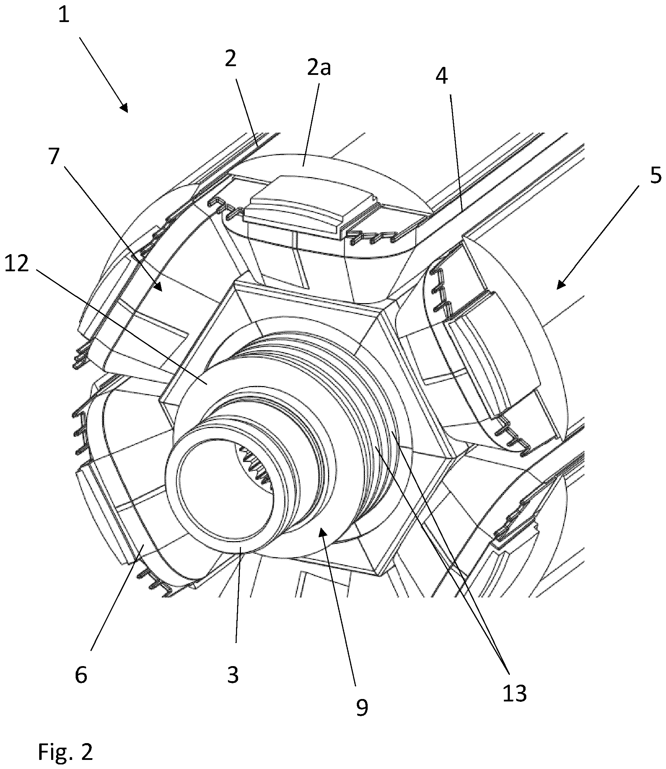

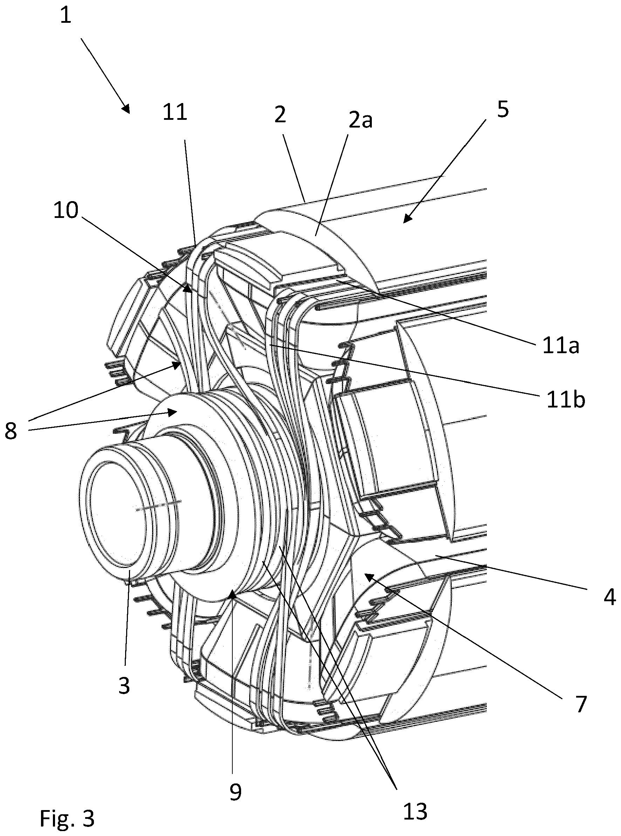

Die Stützvorrichtung 8 weist eine Spann- und Umlenkeinrichtung 9 sowie eine Rovingwicklung 10 aus einem Roving 11 auf. Der Roving 11 kann beispielsweise ein Kunststofffaserbündel oder ein Glasfaserbündel sein. Fig. 2 zeigt einen Ausschnitt des Schenkelpolrotors 1 ohne die Rovingwicklung 10 und Fig. 3 einen Ausschnitt des Schenkelpolrotors 4 mit der Rovingwicklung 10 aus einer weiteren Perspektive. Die Spann- und Umlenkeinrichtung 9 weist zwei Spann- und Umlenkrollen 12 auf, wobei jeweils eine Spann- und Umlenkrolle 12 an einer Stirnseite 2a des Rotorkerns 2 angeordnet. Hier sind die Spann- und Umlenkrollen 12 an der Rotorwelle 3 befestigt. Die Spann- und Umlenkrollen 12 weisen mehrere, axial übereinander angeordnete, in Umfangsrichtung umlaufenden Führungsnuten 13 auf, über welche der Roving 11, beispielsweise diametral, über die Wickelköpfe 7 der Stirnseiten 2a des Rotorkerns 2 an der Rotorwelle 3 vorbeigeführt werden kann und/oder beim Führen über die Wickelköpfe 7 der Stirnseiten 2a des Rotorkerns 2 entlang der Umfangsrichtung umgelenkt werden kann.

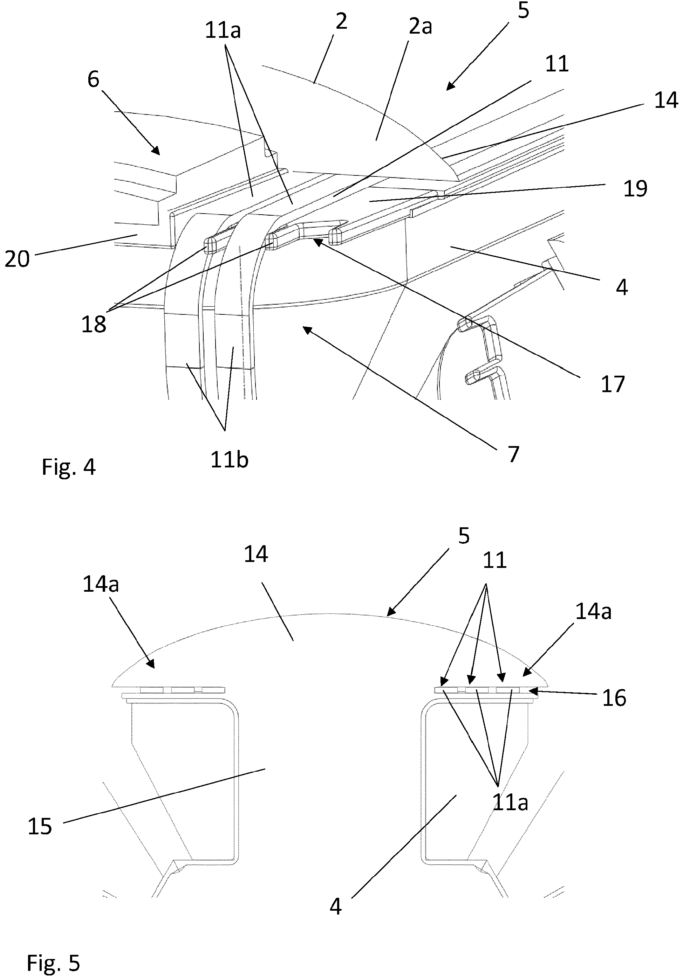

Der Roving 11 weist dabei erste Rovingabschnitte 11a auf, welche sich axial erstrecken, und zweite Rovingabschnitte 11b auf, welche sich entlang der Stirnseiten 2a erstrecken. Fig. 4 zeigt einen Ausschnitt des Schenkelpolrotors 1 im Bereich des Übergangs zwischen den ersten Rovingabschnitten 11a und den zweiten Rovingabschnitten 11b. Der Roving 11 bildet dabei mehrere, entlang der Umfangsrichtung versetzt angeordnete Windungen aus, wobei jede Windung zwei gegenüberliegende Wicklungen 4 umspannt und somit zwei gegenüberliegende Schenkelpole 5 entgegen der Fliehkraft abstützt. Dabei sind hier sechs Windungen pro Schenkelpolpaar, welches aus zwei radial gegenüberliegenden Schenkelpolen 5 gebildet ist, vorgesehen. Jede Windung umfasst dabei zwei axiale erste Rovingabschnitte 11a, wobei der eine Rovingabschnitt 11a an dem einen Schenkelpol 5 eines Schenkelpolpaares angeordnet ist und der andere Rovingabschnitt 11a an dem anderen Schenkelpol 5 desselben Schenkelpolpaares angeordnet ist. Außerdem umfasst jede Windung zwei zweite Rovingabschnitte 11b, wobei der eine Rovingabschnitt 11b an der einen Stirnseite 2a angeordnet ist und der andere Rovingabschnitt 11b an der axial gegenüberliegenden anderen Stirnseite 2a angeordnet ist. Der eine Rovingabschnitt 11b ist dabei mittels der Spann- und Umlenkrolle 12 von dem einen Schenkelpol 5 zum radial gegenüberliegenden Schenkelpol 5 über den Wickelkopf 7 der Stirnseite 2a an der Rotorwelle 3 vorbeigeführt. Der andere, axial gegenüberliegende, stirnseitige Rovingabschnitt 11b ist mittels der Spann- und Umlenkrolle an der anderen Stirnseite 2a umgelenkt und bildet somit einen Windungsübergang zwischen zwei Windungen aus.

Die axialen Rovingabschnitte 11a sind dabei derart am Schenkelpol 5 angeordnet, dass sie zwischen einem Polschuh 14 des Schenkelpols 5 und axialen

Wicklungsleiterabschnitten der um einen Rotorzahn 15 des Schenkelpols 5 gewickelten Wicklung 4 verlaufen. Dies ist insbesondere anhand der Querschnittsdarstellung des Schenkelpolrotors 1 im Bereich des Schenkelpols 5 in Fig. 5 gezeigt. Hier sind pro Schenkelpolpaar jeweils drei Windungen an Polschuhbereichen 14a angeordnet, welche entlang der Umfangsrichtung an dem jeweiligen Rotorzahn 15 überstehen, sodass zwei gegenüberliegende Wicklungen von insgesamt sechs Windungen umreift sind.

Zum Anordnen der ersten Rovingabschnitte 11a in einer radial zwischen den Wicklungen 4 und den Polschuhen 14 liegenden axialen Lücke 16 wird der Roving 11 zunächst entlang der Umfangsrichtung ausgelenkt und in Umfangsrichtung in die Lücke 16 geschoben. Um dabei ein Verrutschen der zweiten Rovingabschnitte 11b an den Stirnseiten 2a zu verhindern, weisen die Sternscheiben 6 hier Einführhilfen 17 auf. Diese fixieren die Roving 11 am Ort des Übergangs zwischen dem zweiten Rovingabschnitt 11b und dem ersten Rovingabschnitt 11a. Die Einführhilfen 17 sind hier axial an den Wickelköpfen 7 überstehende Stifte 18, wobei der Roving 11 zwischen zwei Stiften 18 angeordnet und somit in diesem Bereich in Umfangsrichtung fixiert werden kann. Die Stifte 18 sind hier an Isolationsteilen 19 von axial abstehenden Auskragungen 20 der Sternscheiben 6 angeordnet, welche die Wickelköpfe 7 ebenfalls radial abstützen.

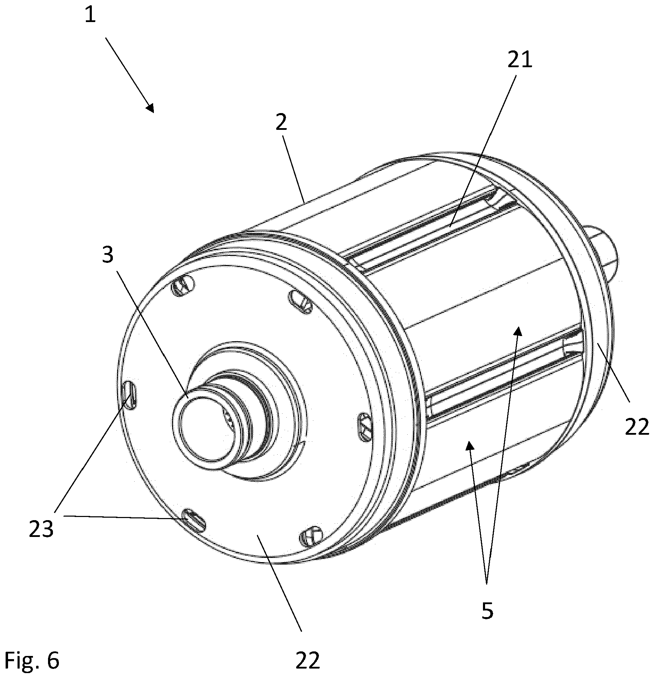

Fig. 6 zeigt den fertig montierten Schenkelpolrotor 1. Dabei sind zwischen zwei Schenkelpolen 5 Deckschieber 21 bzw. Nutverschlusskeile angeordnet, welche eine zwischen zwei Schenkelpolen 5 gebildete Pollücke bzw. Nut verschließen. Außerdem weist der Schenkelpolrotor 1 Stützringe 22 auf, welche an den axial gegenüberliegenden Stirnseiten 2a angeordnet und mit den Sternscheiben 6 mechanisch verbunden sind. Die Stützringe 22 umgeben dabei die Sternscheiben 6 und damit die Wickelköpfe 7. Die Stützringe 22 weisen Befüllöffnungen 23 auf, über welche eine Kavität unterhalb der Stützringe 22, in welchem sich unter anderem Wickelköpfe und die Rovingwicklung 11 befindet, mit einer Vergussmasse befüllt werden kann. Eine solche Vergussmasse kann beispielsweise ein Vergussharz sein, mittels welchem die Rotorwicklung 4 weiter stabilisiert und geschützt werden kann. Durch dieses Vergussmasse wird mit der Rovingwicklung 11 ein Faserverbundkörper gebildet, welcher in der Lage ist, einen Großteil der Fliehkräfte der Wickelköpfe 7 aufzunehmen. Dies ermöglicht es, die zusätzlichen Stützstrukturen, beispielsweise die Sternscheiben 6 und den Stützring 22, so dünn wie möglich zu gestalten bzw. aus einem für die Kühlung des Schenkelpolrotors 1 optimierten Material auszubilden.

## Patentansprüche

1. Schenkelpolrotor (1) für eine elektrische Maschine aufweisend:
- einen Rotorkern (2), welcher ein Rotorjoch und in Umfangsrichtung an dem Rotorjoch verteilt angeordnete Schenkelpole (5) aufweist, wobei jeweils zwei radial gegenüberliegende Schenkelpole (5) ein Schenkelpolpaar ausbilden und wobei die Schenkelpole (5) jeweils einen Rotorzahn (15) und einen Polschuh (14) aufweisen,
- magnetfelderzeugende Wicklungen (4), welche um die Rotorzähne (15) der Schenkelpole (5) gewickelt sind und an gegenüberliegenden Stirnseiten (2a) des Rotorkerns (2) Wickelköpfe (7) ausbilden, und
- eine Stützvorrichtung (8) zum Abstützen der Wickelköpfe (7),
wobei die Stützvorrichtung (8) eine Spann- und Umlenkeinrichtung (9) und eine Rovingwicklung (10) mit einem Roving (11) aufweist, **dadurch gekennzeichnet, dass** durch den Roving (11) mehrere, in Umfangsrichtung versetzte, die Wicklungen (4) jeweils eines Schenkelpolpaars umspannende Windungen gebildet sind und der Roving (11) dazu axiale erste Rovingabschnitte (11a) und stirnseitige zweite Rovingabschnitte (11b) aufweist, wobei die zweiten Rovingabschnitte (11b) mittels der Spann- und Umlenkeinrichtung (9) zum Ausbilden einer Windung zwischen radial gegenüberliegenden Schenkelpolen (5) über die Wickelköpfe (7) geführt sind und zum Ausbilden eines Windungsübergangs zwischen zwei Windungen beim Führen über die Wickelköpfe (7) entlang der Umfangsrichtung umgelenkt sind.

2. Schenkelpolrotor (1) nach Anspruch 1,
**dadurch gekennzeichnet, dass**
die Rovingwicklung (10) für jedes Schenkelpolpaar zumindest zwei Windungen aufweist, welche an in Umfangsrichtung gegenüberliegenden, an den jeweiligen Rotorzähnen (15) abstehenden Polschuhbereichen (14a) der Polschuhe (14) angeordnet sind.

3. Schenkelpolrotor (1) nach Anspruch 1 oder 2,
**dadurch gekennzeichnet, dass**
der Roving (11) als ein Kunststofffaserbündel oder ein Glasfaserbündel ausgebildet ist.

4. Schenkelpolrotor (1) nach einem der vorhergehenden Ansprüche,
**dadurch gekennzeichnet, dass**
die Spann- und Umlenkeinrichtung (9) zwei Spann- und Umlenkrollen (12) aufweist, welche an den axial gegenüberliegenden Stirnseiten (2a) des Rotorkerns (2) angeordnet sind.

5. Schenkelpolrotor (1) nach Anspruch 4,
**dadurch gekennzeichnet, dass**
die Spann- und Umlenkrollen (12) mehrere, axial übereinander angeordnete Führungsnuten (13) zum Umlenken und zum Vorbeiführen der zweiten Rovingabschnitte (11b) an einer Rotorwelle (3) des Schenkelpolrotors (1) aufweisen.

6. Schenkelpolrotor (1) nach Anspruch 4 oder 5,
**dadurch gekennzeichnet, dass**
ein Rovinganfang des Rovings zum Fixieren des Rovings durch Ausbilden eines Rovingzugs mehrmals um eine der Spann- und Umlenkrollen (12) gewickelt ist.

7. Schenkelpolrotor (1) nach einem der vorhergehenden Ansprüche,
**dadurch gekennzeichnet, dass**
zwischen den Wicklungen (4) und den Polschuhen (14) der Schenkelpole (5) axial erstreckende Lücken (16) gebildet sind, in welchen die ersten Rovingabschnitte (11a) angeordnet sind.

8. Schenkelpolrotor (1) nach Anspruch 7,
**dadurch gekennzeichnet, dass**
der Schenkelpolrotor (1) zwei Sternscheiben (6) aufweist, welche zwischen den Stirnseiten (2a) des Rotorkerns (2) und den Wickelköpfen (7) angeordnet sind und welche Einführhilfen (17) zum tangentialen Einführen der ersten Rovingabschnitte (11a) in die Lücken (16) aufweisen.

9. Schenkelpolrotor (1) nach Anspruch 8,
**dadurch gekennzeichnet, dass**
die Einführhilfen (17) als an den Wickelköpfen (7) axial überstehende Stifte (18) der Sternscheiben (6) ausgebildet sind, zwischen welchen der Roving (11) im Bereich eines Übergangs zwischen den ersten Rovingabschnitten (11a) und den zweiten Rovingabschnitten (11b) angeordnet ist, wobei die Stifte (18) dazu ausgelegt sind, ein Verrutschen der zweiten Rovingabschnitte (11b) entlang der Umfangsrichtung beim Einführen des Rovings (11) in die Lücken (16) zu verhindern.

10. Schenkelpolrotor (1) nach einem der vorhergehenden Ansprüche,
**dadurch gekennzeichnet, dass**
der Schenkelpolrotor (1) Stützringe (22) aufweist, welche an den Stirnseiten (2a) zum Ummanteln der Wickelköpfe (7) angeordnet sind, wobei Kavitäten unterhalb der Stützringe (22), in welchen die Wickelköpfe (7) und die Rovingwicklung (10) angeordnet sind, mit einer Vergussmasse zum Ausbilden eines die Rovingwicklung (10) aufweisenden Faserverbundwerkstoffes gefüllt sind.

11. Elektrische Maschine für ein Kraftfahrzeug mit einem Stator und einem bezüglich des Stators drehbar gelagerten Schenkelpolrotor (1) nach einem der vorhergehenden Ansprüche.

## Claims

1. Salient pole rotor (1) for an electric machine having:
- a rotor core (2) which has a rotor yoke and salient poles (5) which are arranged distributed in the circumferential direction on the rotor yoke, two salient poles (5) which lie radially opposite one another each forming a salient pole pair, and the salient poles (5) each having a rotor tooth (15) and a pole shoe (14),
- magnetic field-generating windings (4) which are wound around the rotor teeth (15) of the salient poles (5) and configure winding heads (7) on opposite end sides (2a) of the rotor core (2), and
- a supporting apparatus (8) for supporting the winding heads (7),
wherein the supporting apparatus (8) has a tensioning and deflecting device (9) and a roving winding (10) with a roving (11), **characterized in that** by way of the roving (11) a plurality of windings are formed which are offset in the circumferential direction and encompass the windings (4) of in each case one salient pole pair, and the roving (11) has, to this end, axial first roving portions (11a) and end-side second roving portions (11b), the second roving portions (11b) being guided over the winding heads (7) by means of the tensioning and deflecting device (9) in order to configure a winding between salient poles (5) which lie radially opposite one another, and being deflected along the circumferential direction during guiding over the winding heads (7) in order to configure a winding transition between two windings.

2. Salient pole rotor (1) according to Claim 1, **characterized in that**,
for each salient pole pair, the roving winding (10) has at least two windings which are arranged on pole shoe regions (14a) of the pole shoes (14) which lie opposite one another in the circumferential direction and project on the respective rotor teeth (15).

3. Salient pole rotor (1) according to Claim 1 or 2, **characterized in that**
the roving (11) is configured as a plastic fiber bundle or as a glass fiber bundle.

4. Salient pole rotor (1) according to one of the preceding claims,
**characterized in that**
the tensioning and deflecting device (9) has two tensioning and deflecting rollers (12) which are arranged on the end sides (2a) of the rotor core (2) which lie axially opposite one another.

5. Salient pole rotor (1) according to Claim 4, **characterized in that**
the tensioning and deflecting rollers (12) have a plurality of guide grooves (13) which are arranged axially above one another in order to deflect the second roving portions (11b) and to guide them past a rotor shaft (3) of the salient pole rotor (1).

6. Salient pole rotor (1) according to Claim 4 or 5, **characterized in that**
a roving start of the roving is wound multiple times around one of the tensioning and deflecting rollers (12) in order to fix the roving by way of configuration of a roving tension.

7. Salient pole rotor (1) according to one of the preceding claims,
**characterized in that**
axially extending gaps (16) are configured between the windings (4) and the pole shoes (14) of the salient poles (5), in which gaps (16) the first roving portions (11a) are arranged.

8. Salient pole rotor (1) according to Claim 7, **characterized in that**
the salient pole rotor (1) has two star disks (6) which are arranged between the end sides (2a) of the rotor core (2) and the winding heads (7), and which have insertion aids (17) for the tangential insertion of the first roving portions (11a) into the gaps (16).

9. Salient pole rotor (1) according to Claim 8, **characterized in that**
the insertion aids (17) are configured as pins (18), projecting axially on the winding heads (7), of the star disks (6), between which the roving (11) is arranged in the region of a transition between the first roving portions (11a) and the second roving portions (11b), the pins (18) being designed to prevent slipping of the second roving portions (11b) along the circumferential direction during the insertion of the roving (11) into the gaps (16).

10. Salient pole rotor (1) according to one of the preceding claims,
**characterized in that**
the salient pole rotor (1) has supporting rings (22) which are arranged on the end sides (2a) in order to encase the winding heads (7), cavities below the supporting rings (22), in which the winding heads (7) and the roving winding (10) are arranged, being filled with a potting material in order to configure a fiber composite material which comprises the roving winding (10).

11. Electric machine for a motor vehicle with a stator and a salient pole rotor (1) according to one of the preceding claims which is mounted rotatably with regard to the stator.

## Revendications

1. Rotor (1) à pôles saillants pour une machine électrique, comprenant :
- un noyau de rotor (2) qui comporte une culasse de rotor et des pôles saillants (5) répartis sur la circonférence de la culasse de rotor, deux pôles saillants (5) opposés radialement formant une paire de pôles saillants et les pôles saillants (5) présentant chacun une dent de rotor (15) et une pièce polaire (14),
- des enroulements (4) générateurs de champ magnétique, qui sont enroulés autour des dents de rotor (15) des pôles saillants (5) et qui forment des têtes de bobinage (7) sur des faces frontales opposées (2a) du noyau de rotor (2), et
- un dispositif de support (8) pour supporter les têtes de bobinage (7),
le dispositif de support (8) présentant un dispositif (9) de tension et de déviation, et un enroulement de mèches, en anglais de « roving », (10) avec une mèche, en anglais « roving », (11), **caractérisé en ce que** plusieurs spires décalées dans le sens circonférentiel, entourant les enroulements (4) de chaque paire de pôles saillants, sont formées par le roving (11), et le roving (11) présente à cet effet des premières portions axiales (11a) de roving et des deuxièmes portions côté frontal (11b) de roving, les deuxièmes portions (11b) de roving étant guidées sur les têtes de bobinage (7) au moyen du dispositif (9) de tension et de déviation, pour former une spire entre des pôles saillants (5) radialement opposés, et étant déviées dans la direction circonférentielle lors du guidage sur les têtes de bobinage (7), pour former une transition entre deux spires.

2. Rotor (1) à pôles saillants selon la revendication 1,
**caractérisé en ce que**
l'enroulement de roving (10) présente, pour chaque paire de pôles saillants, au moins deux spires qui sont agencées sur des zones (14a) de pièces polaires des pièces polaires (14) qui sont opposées dans la direction circonférentielle et qui font saillie des dents de rotor (15) respectives.

3. Rotor (1) à pôles saillants selon la revendication 1 ou la revendication 2,
**caractérisé en ce que**
le roving (11) est conçu sous la forme d'un faisceau de fibres synthétiques ou d'un faisceau de fibres de verre.

4. Rotor (1) à pôles saillants selon l'une des revendications précédentes,
**caractérisé en ce que**
le dispositif (9) de tension et de déviation présente deux poulies (12) de tension et de déviation qui sont agencées sur les faces frontales (2a) axialement opposées du noyau de rotor (2).

5. Rotor (1) à pôles saillants selon la revendication 4,
**caractérisé en ce que**
les poulies (12) de tension et de déviation présentent plusieurs rainures de guidage (13) agencées axialement les unes au-dessus des autres pour dévier les deuxièmes portions (11b) de roving et les faire passer sur un arbre de rotor (3) du rotor (1) à pôles saillants.

6. Rotor (1) à pôles saillants selon la revendication 4 ou la revendication 5,
**caractérisé en ce que**
un début de roving est enroulé plusieurs fois autour de l'une des poulies (12) de tension et de déviation, de façon à fixer le roving en formant une tension de roving.

7. Rotor (1) à pôles saillants selon l'une des revendications précédentes,
**caractérisé en ce que**
des interstices (16) s'étendant axialement sont formés entre les enroulements (4) et les pièces polaires (14) des pôles saillants (5), dans lesquels sont agencées les premières portions de roving (11a).

8. Rotor (1) à pôles saillants selon la revendication 7,
**caractérisé en ce que**
le rotor (1) à pôles saillants présente deux disques en étoile (6) qui sont agencés entre les faces frontales (2a) du noyau de rotor (2) et les têtes de bobinage (7) et qui présentent des aides à l'insertion (17) pour l'insertion tangentielle des premières portions de roving (11a) dans les interstices (16).

9. Rotor (1) à pôles saillants selon la revendication 8,
**caractérisé en ce que**
les aides à l'insertion (17) sont conçues sous la forme de tiges (18) des disques en étoile (6) qui font saillie axialement des têtes de bobinage (7) et entre lesquelles le roving (11) est agencé dans la zone de transition entre les premières portions de roving (11a) et les deuxièmes portions (11b) de roving, les tiges (18) étant conçues de façon à empêcher un glissement des deuxièmes portions (11b) de roving dans la direction circonférentielle lors de l'insertion du roving (11) dans les interstices (16).

10. Rotor (1) à pôles saillants selon l'une des revendications précédentes,
**caractérisé en ce que**
le rotor (1) à pôles saillants présente des bagues d'appui (22), qui sont agencées sur les faces frontales (2a) pour envelopper les têtes de bobinage (7), des cavités, situées sous les bagues d'appui (22), dans lesquelles sont agencées les têtes de bobinage (7) et le bobinage de roving (10), étant remplies d'une masse de scellement afin de former un matériau composite renforcé de fibres comprenant l'enroulement de roving (10).

11. Machine électrique pour un véhicule automobile, comprenant un stator et un rotor (1) à pôles saillants monté de manière rotative par rapport au stator, selon l'une des revendications précédentes.
